# EUROPÄISCHE PATENTSCHRIFT

(11) **EP 3 953 609 B1**
(45) Veröffentlichungstag und Bekanntmachung des Hinweises auf die Patenterteilung: **03.07.2024**
(21) Anmeldenummer: 20717547.2
(22) Anmeldetag: 03.04.2020
(51) Int. Cl.: F16G 13/16

(54) **ENERGIEFÜHRUNGSKETTE SOWIE BEARBEITUNGSMASCHINE MIT ENERGIEFÜHRUNGSKETTE**
CABLE CARRIER AND PROCESSING MACHINE HAVING A CABLE CARRIER
CHAÎNE PORTE-CÂBLES ET MACHINE D'USINAGE ÉQUIPÉE D'UNE CHAÎNE PORTE-CÂBLES

(30) Priorität: 12.04.2019 DE 102019109747
(43) Veröffentlichungstag der Anmeldung: 16.02.2022
(73) Patentinhaber: Trumpf Laser- und Systemtechnik GmbH, 71254 Ditzingen (DE)
(72) Erfinder: BLASER, Martin, 88267 Vogt (DE); FISCHER, Gunter, 71297 Moensheim (DE)
(74) Vertreter: Trumpf Patentabteilung
(86) Internationale Anmeldenummer: PCT/EP2020/059621
(87) Internationale Veröffentlichungsnummer: WO 2020/207931

(56) Entgegenhaltungen:
- DE-A1- 19 919 075
- DE-A1-102013 226 954
- US-A- 3 330 105

## Beschreibung

Die Erfindung betrifft eine Energieführungskette für eine Bearbeitungsmaschine zur Bearbeitung von plattenförmigen Werkstücken sowie eine Bearbeitungsmaschine mit einer Energieführungskette.

Aus der WO 2016/131964 A1 ist eine Energieführungskette für eine Bearbeitungsmaschine zur Werkstückbearbeitung bekannt. Diese Energieführungskette umfasst mehrere miteinander gelenkig verbundene Kettenglieder, wobei eine der beiden Seiten der Energieführungskette mit einem elastisch biegbaren Band abgedeckt ist, das zumindest an einigen Kettengliedern gehalten und in Kettenlängsrichtung verschiebbar geführt ist. Dieses Abdeckband erstreckt sich in Kettenquerrichtung bevorzugt beidseitig über die Kettenglieder hinaus. Dadurch kann ein zwischen einer abgelegten Energieführungskette und einer Führungsrinne sich befindlicher Spalt zumindest im Bereich von darüberliegenden Umhausungswänden und/oder Türen abgedeckt werden, wodurch die Verschmutzungsgefahr verringert werden kann. Darüber hinaus kann die Gefahr des Austritts von Laserstrahlung minimiert und somit die Lasersicherheit verbessert werden.

Auch aus der DE 102013226954 A1 ist eine Bearbeitungsmaschine mit einer Energieführungskette bekannt. Ferner ist aus der DE 19919075 A1 eine Energieführungskette bekannt, die aus verschiedenartigen Kettengliedern zusammengesetzt sein kann.

Der Erfindung liegt die Aufgabe zugrunde, eine Energieführungskette sowie eine Bearbeitungsmaschine mit einer Energieführungskette vorzuschlagen, welche im Aufbau kostengünstig ist und bei einer abgelegten Energieführungskette die Gefahr des Austritts der Laserstrahlung minimiert.

Diese Aufgabe wird durch eine Energieführungskette gelöst, bei welcher zwischen zwei Kettengliedern zumindest ein Sonderkettenglied vorgesehen ist, welches gegenüber den an das Sonderkettenglied angrenzenden Kettengliedern einen in der Höhe verringerten Querschnitt aufweist. Diese Energieführungskette wird bezüglich einer Umhausungswand der Bearbeitungsmaschine oder einer verschiebbaren Tür von der Umhausung der Bearbeitungsmaschine derart positioniert, dass das Sonderkettenglied zwischen einem Boden und der Umhausungswand oder in einem Verfahrweg der verschiebbaren Tür auf dem Boden liegt. Durch den in der Höhe verringerten Querschnitt wird die Gesamthöhe des Sonderkettengliedes verringert. Dadurch kann ein Überfahren des Sonderkettengliedes beispielsweise durch die verschiebbare Tür gegeben sein. Eine solche verschiebbare Tür der Umhausung weist zum Untergrund ausgerichtet einen Schutzvorhang, insbesondere in Form von Borsten auf, welche im Bereich der verringerten Höhe des Sonderkettengliedes dieses überfahren. Die Energieführungskette liegt bevorzugt auf einem Boden auf, auf welchem die Bearbeitungsmaschine oder die Umhausung aufgesetzt ist.

Das Sonderkettenglied weist einer Auflagefläche gegenüberliegend einen nach oben offen ausgerichteten Kanal auf, der sich quer zur Kettenlängsrichtung erstreckt. Dadurch wird ermöglicht, dass die Energieführungskette mit den Kettengliedern und des Sonderkettengliedes eben auf einem Boden aufliegt und ein quer zur Kettenlängsrichtung sich erstreckender Kanal im Sonderkettenglied mit einer verringerten Höhe im Aufbau gebildet ist. Dadurch ist ein einfaches Überfahren der Tür zum Öffnen und Schließen der Umhausung oder auch ein vereinfachtes Herausführen der Energieführungskette bei einem feststehenden Wandabschnitt der Umhausung der Bearbeitungsmaschine ermöglicht.

Die Unterseite des Sonderkettengliedes liegt bevorzugt in der Ebene des zumindest einen Tragstegs des benachbarten Kettengliedes. Dadurch ist auch ermöglicht, dass im Arbeitsraum der Energieführungskette eine durchgehend ebene Fläche zwischen den Kettengliedern und dem Sonderkettenglied gegeben ist, um zumindest eine Versorgungsleitung zu führen.

Das Sonderkettenglied ist in der Höhe bevorzugt derart verjüngt, dass ein verjüngter Innenraum gebildet ist, der sich zwischen einer Unterseite bzw. eines unteren Tragsteges des Sonderkettengliedes und einer neutralen Faser oder unterhalb einer neutralen Faser erstreckt. Die neutrale Faser der Kettenglieder liegt in einer Verbindungslinie von Gelenkverbindungen zwischen den einzelnen Kettengliedern. Dadurch kann eine besonders geringe Überfahrhöhe bzw. Aufbauhöhe erzielt werden.

Eine weitere vorteilhafte Ausgestaltung des Sonderkettengliedes sieht vor, dass an zumindest einem Ende des Kanales ein Lichtschutzabschnitt vorgesehen ist, der über die Breite der beidseitig an das Sonderkettenglied angrenzenden Kettenglieder sich nach außen erstreckt. Durch diesen Lichtabschnitt, der vorzugsweise die Höhe des Kanales aufweist, wird der Kanal quasi verlängert und ermöglicht, dass eine zusätzliche Abschirmung gegen das Austreten von Laserstrahlung erzielt wird. Beim Überfahren des Kanals durch Borsten an der verschiebbaren Tür sind die Borsten im Bereich des Kanalbodens geneigt und nach dem Überfahren des Kanalbodens im Wesentlichen direkt nach unten auf den Boden ausgerichtet. Dazwischenliegend kann ein Öffnungsspalt gebildet sein, durch welchen Laserstrahlung austreten kann. Dieser wird durch die Lichtschutzabschnitte geschlossen.

Eine weitere bevorzugte Ausgestaltung der Energieführungskette sieht vor, dass der Kanal des Sonderkettengliedes U-förmig ausgebildet ist und an den jeweiligen Enden des Kanals Einführschrägen vorgesehen sind. Dadurch kann ein erleichtertes Einführen des Schutzvorhanges der verschiebbaren Tür in den Kanal erfolgen. Insbesondere ist vorgesehen, dass an einem Ende der Seitenwand des Kanals ein Lichtschutzabschnitt vorgesehen ist, der sich über die Breite der Kettenglieder hinaus erstreckt und an diesem Lichtschutzabschnitt nach außen anschließend die Einführschräge ausgebildet ist.

Des Weiteren ist bevorzugt vorgesehen, dass der Kanal stirnseitig jeweils eine Auflaufschräge aufweist, die sich von einer Auflagefläche des Sonderkettengliedes bis zum Kanalboden erstreckt. Dadurch kann ein vereinfachtes Aufgleiten des Abschirmvorhanges der verschiebbaren Tür gegeben sein.

Vorteilhafterweise kann der Kanalboden eine Länge aufweisen, welche kleiner als der Abstand zwischen zwei einander gegenüberliegenden Seitenelementen der benachbarten Kettenglieder ist. Dadurch wird zwar der zur Verfügung stehende Innenraum zur Führung der Versorgungsleitungen in der Breite verringert, jedoch ist dadurch ein verbesserter Schutz gegen den Austritt von Lichtstrahlung ermöglicht, da der Lichtschutzabschnitt mit einer größeren Fläche im Bereich der Auflaufschräge wirken kann.

Des Weiteren ist bevorzugt vorgesehen, dass in Kettenlängsrichtung gesehen vor und hinter dem Kanal Seitenelemente des Sonderkettengliedes vorgesehen sind, welche gelenkig mit den jeweils dazu benachbarten Kettengliedern verbunden sind. Dadurch können das oder die Sonderkettenglieder zwischen zwei herkömmlichen Kettengliedern gelenkig eingebunden werden, wodurch ein Umlenkradius der Kettenglieder nahezu beibehalten werden kann.

Das Sonderkettenglied weist bevorzugt an den in der Höhe reduzierten Innenraum angrenzend Führungselemente auf, die sich in und entgegen der Kettenlängsrichtung erstrecken. Diese Führungselemente sind in Umlenkrichtung der Kettenglieder geneigt. Vorzugsweise sind diese Führungselemente bündig zur Unterseite des Kanalbodens ausgerichtet. Dadurch wird eine Knickung der Versorgungsleitungen beim Umlenken der Energieführungskette verhindert.

Eine weitere bevorzugte Ausgestaltung der Energieführungskette sieht vor, dass die zumindest eine Versorgungleitung in oder benachbart an einer Gelenkachse zwischen dem Sonderkettenglied und dem dazu benachbarten Kettenglied befestigt ist. Diese Anordnung weist den Vorteil auf, dass die zumindest eine Versorgungsleitung nahe oder in der neutralen Faser geführt ist und somit eine Relativbewegung am jeweiligen Ende der Energieführungskette minimiert wird. Alternativ kann vorgesehen sein, dass die zumindest eine Versorgungsleitung in dem verjüngten Innenraum fixiert ist.

Des Weiteren ist bevorzugt vorgesehen, dass die zumindest eine Versorgungsleitung an einem einlaufseitigen oder auslaufseitigen Ende der Energieführungskette lose geführt ist. Dadurch wird sichergestellt, dass während einer Umlenkbewegung der Energieführungskette die zumindest eine Versorgungsleitung spannungsfrei, also zug- und/oder druckspannungsfrei, geführt wird.

Des Weiteren ist bevorzugt vorgesehen, dass an den nach oben offenen Seitenwänden des Kanals des Sonderkettengliedes in und entgegengesetzt zur Kettenlängsrichtung Schwenkbegrenzungselemente vorgesehen sind. Diese Schwenkbegrenzungselemente sind in Richtung auf das benachbarte übliche Kettenglied derart ausgerichtet und angeschrägt, dass zwischen dem Sonderkettenglied und dem benachbarten üblichen Kettenglied derselbe Schwenkwinkel eingenommen wird wie zwischen zwei üblichen Kettengliedern, oder bei abweichender Länge des Sonderglieds zu üblichem Kettenglied der Schwenkwinkel so ausgeführt ist, dass die Länge der innerhalb des Sonderglieds befindlichen Kabel beim Schwenken der Kettenglieder idealer Weise der Länge der neutralen Faser entsprechen.

Das Sonderkettenglied ist bevorzugt aus einem metallischen Werkstoff, insbesondere aus Stahlblech, ausgebildet. Dies weist den Vorteil auf, dass geringe Wandstärken zum Einsatz kommen können, wodurch einerseits die Überfahrhöhe im Kanalboden reduziert und andererseits eine noch hinreichende Höhe des verjüngten Innenraumes erzielt werden kann.

Bevorzugt ist bei der Ausgestaltung des Sonderkettengliedes aus einem metallischen Werkstoff an dem Sonderkettenglied, insbesondere innenliegend, ein Anschluss für einen Schutzleiter oder Nullleiter vorgesehen. Dieser Anschluss dient zur Erdung und damit zur Personensicherheit beim Fehlerfall oder bei einem möglichen Kabelbruch.

Die der Erfindung zugrundeliegende Aufgabe wird des Weiteren durch eine Bearbeitungsmaschine zum Bearbeiten eines Werkstückes, insbesondere plattenförmigen Materials, gelöst, bei welcher in einer Bearbeitungsstation, in der durch einen Bearbeitungskopf ein Bearbeitungsstrahl auf das Werkstück gerichtet ist, eine Palette einfahrbar ist, welche eine Werkstückauflage zur Aufnahme des plattenförmigen Werkstückes aufweist und die Palette zwischen der Bearbeitungsstation und einer Be- und Entladestation verfahrbar ist und die Bearbeitungsstation von einer Umhausung umgeben ist, welche zumindest eine verschiebbare Tür zur Bearbeitungsstation aufweist, wobei eine Energieführungskette mit einem Ende in der Bearbeitungsstation oder in der Be- und Entladestation fixiert ist und mit dem anderen Ende an der verfahrbaren Palette fixiert ist und im Verfahrweg der verschiebbaren Tür der Umhausung ein Sonderkettenglied der Energieführungskette vorgesehen ist, welches gegenüber den benachbarten Kettengliedern einen in der Höhe verringerten Querschnitt aufweist, wobei das Sonderkettenglied eine Auflagefläche aufweist und dieser gegenüberliegend einen nach oben ausgerichteten und nach oben offenen Kanal aufweist, der sich quer zur Kettenlängsrichtung erstreckt. Dadurch wird bei einer abgelegten Energieführungskette ein einfaches Öffnen und Schließen der Tür ermöglicht sein. Die Palette kann zwischen der Be- und Entladestation einerseits und der Bearbeitungsstation andererseits verfahren werden. Sowohl bei einer Position der Palette in der Bearbeitungsstation als auch in der Be- und Entladestation kann bei einer geschlossenen Tür ein Austritt von Laserstrahlung aus der Bearbeitungsstation minimiert oder sogar vollständig verhindert werden. Auch kann diese Energieführungskette bei feststehenden Wänden einer Umhausung eingesetzt werden, um Versorgungsleitungen von außerhalb der Umhausung nach innen zu einer Bearbeitungsmaschine zu führen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer Bearbeitungsmaschine mit einer Umhausung und einer Palette in einer Bearbeitungsstation,
- Figur 2: eine schematische Seitenansicht der Bearbeitungsmaschine gemäß Figur 1 mit der Palette in einer Beund Entladestation,
- Figur 3: eine perspektivische Ansicht auf eine Energieführungskette mit Kettengliedern und einem Sonderkettenglied,
- Figur 4: eine schematische Schnittansicht entlang der Linie IV-IV in Figur 3,
- Figur 5: eine schematische Schnittansicht entlang der Linie V-V in Figur 3,
- Figur 6: eine schematische Ansicht eines Schutzvorhanges einer Tür in dem Sonderkettenglied,
- Figur 7: eine perspektivische Ansicht des Sonderkettenglieds mit benachbarten Kettengliedern in einer abgewinkelten Position, und
- Figur 8: eine perspektivische Schnittansicht einer alternativen Ausführungsform des Sonderkettengliedes zu Figur 7.

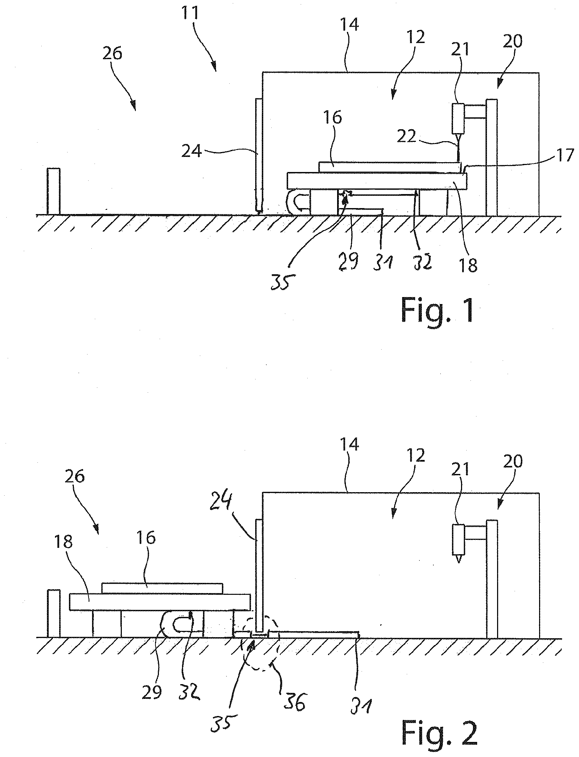

In Figur 1 ist eine schematische Seitenansicht einer Bearbeitungsmaschine 11 zur trennenden Bearbeitung von plattenförmigen Materialien dargestellt. Eine Bearbeitungsstation 12 der Bearbeitungsmaschine 11 ist von einer Umhausung 14 umgeben. In der Bearbeitungsstation 12 wird ein plattenförmiges Material 16 mit einem Schneidstrahl 22 bearbeitet. Das plattenförmige Material 16 liegt auf einer Werkstückauflage 17 auf, welche an einer verfahrbaren Palette 18 vorgesehen ist. Innerhalb der Bearbeitungsstation 12 ist ein Linearachsensystem 20 vorgesehen, welches einen Bearbeitungskopf 21 zur Ausgabe eines Schneidstrahls 22 aufnimmt. Dieser Bearbeitungskopf 21 ist durch das Linearachsensystem 20 zwei- oder dreidimensional relativ zum plattenförmigen Material 16 verfahrbar. Diese Bearbeitungsmaschine 11 kann beispielsweise als eine Laserschneidmaschine ausgebildet sein, so dass durch den Bearbeitungskopf 21 ein Laserschneidstrahl ausgegeben wird. Alternativ kann die Bearbeitungsmaschine 11 auch als eine Plasmaschneidmaschine oder eine Stanz-Laser-Kombinationsmaschine ausgebildet sein.

Die Umhausung 14 ist als Arbeitsschutz ausgebildet und dient insbesondere dazu, einen Austritt von einer Laserstrahlung zu minimieren oder im Idealfall vollständig zu verhindern. In der Umhausung 14 ist eine Tür 24 vorgesehen, welche horizontal oder vertikal verschiebbar, verfahrbar oder bewegbar ist, um die Umhausung 14 zu öffnen. Die Palette 18 kann bei geöffneter Tür 24 aus der Bearbeitungsstation 12 in eine benachbart dazu angeordnete Be- und Entladestation 26 verfahren werden. Diese Position ist in Figur 2 dargestellt.

Zur Energieversorgung der verfahrbaren Palette 18 ist zumindest eine Versorgungsleitung 28 vorgesehen, welche in einer Energieführungskette 29 aufgenommen ist. Diese Energieführungskette 29 ist mit einem Ende bevorzugt in der Bearbeitungsstation 12 fixiert. Das andere Ende 32 der Energieführungskette 29 ist an der verfahrbaren Palette 18 fixiert. Der Verfahrweg der Energieführungskette 29 von der Be- und Entladestation 26 in die Bearbeitungsstation 12 kreuzt die Umhausung 14, insbesondere die öffenbare Tür 24. Die Energieführungskette 29 umfasst zumindest ein Sonderkettenglied 34, welches zwischen üblichen Kettengliedern 35 aufgenommen ist. Dieses Sonderkettenglied 34 ist im Kreuzungspunkt 36 der Energieführungskette 29 und der Tür 24 oder einer Wand der Umhausung 14 positioniert. Dieser Kreuzungspunkt 36 ist in Figur 2 dargestellt. Durch das Sonderkettenglied 34, welches in die Energieführungskette 29 integriert ist, kann die Gefahr des Austritts von Laserstrahlung in dem Kreuzungspunkt 36 minimiert oder im Idealfall vollständig verhindert sein.

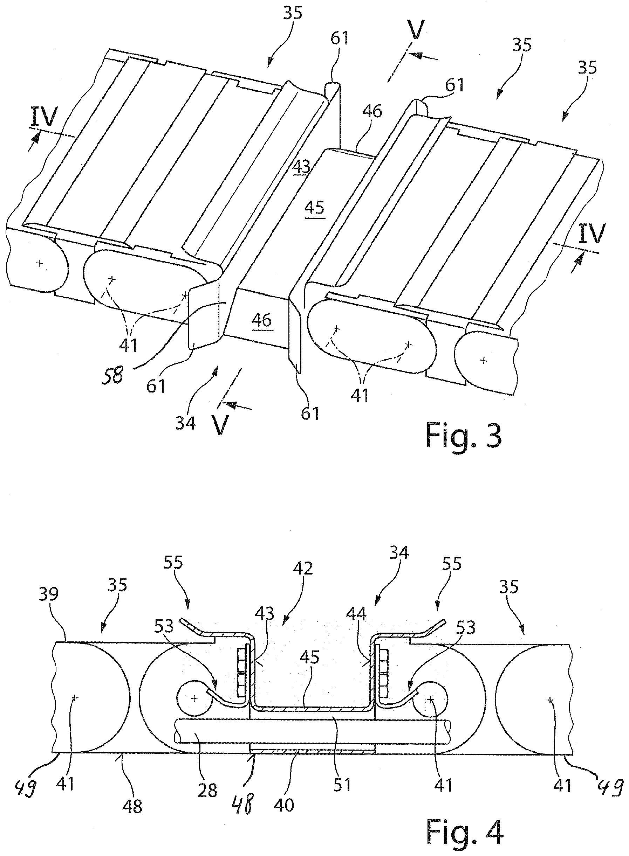

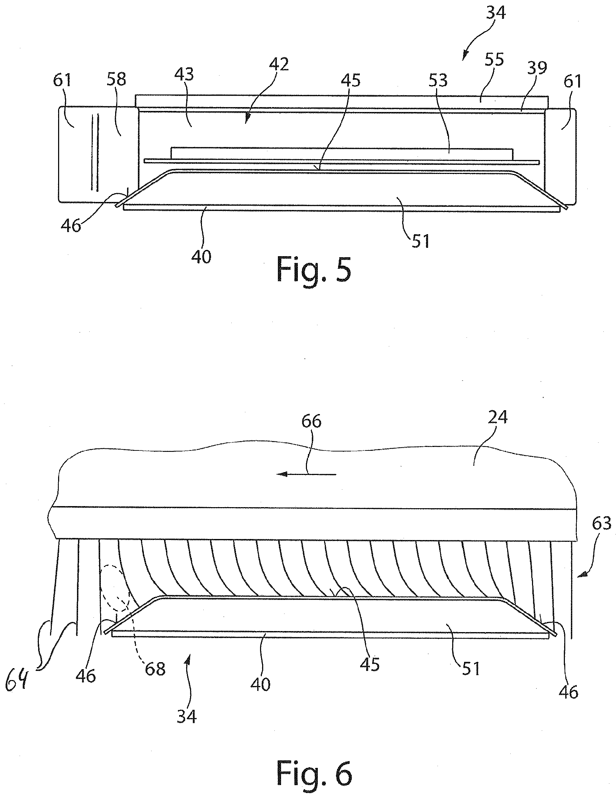

In Figur 3 ist eine perspektivische Ansicht der Energieführungskette 29 dargestellt. Die Energieführungskette 29 besteht aus mehreren, gelenkig miteinander verbundenen Kettengliedern 35 und einem zwischen zwei Kettengliedern 35 angeordneten Sonderkettenglied 34. Eine schematische Schnittansicht des Sonderkettengliedes 34 entlang der Linie IV-IV ist in Figur 4 dargestellt. Eine weitere Schnittansicht entlang der Linie V-V ist in Figur 5 dargestellt.

Die Kettenglieder 35, die allgemein bekannt sind, weisen zwei einander gegenüberliegende Seitenelemente 37, 38 auf, welche durch zwei einander gegenüberstehende längliche Tragstege 39, 49 zueinander beabstandet sind. Die Seitenelemente 37, 38 sowie die Tragstege 39, 49 bilden ein Hohlprofil. An den Seitenelementen 37, 38 ist jeweils ein Gelenkverbindungselement vorgesehen, um ein benachbartes Kettenglied gelenkig aufzunehmen. Die daraus entstehenden Gelenkachsen 41 sind schematisch dargestellt. Die einzelnen aneinandergereihten Hohlprofile bilden einen Arbeitsraum der Energieführungskette 29, in welchem die zumindest eine Versorgungsleitung 28 geführt ist.

Das Sonderkettenglied 34 umfasst einen einseitig nach oben offenen Kanal 42. Dieser Kanal 42 wird durch Seitenwände 43, 44 gebildet, welche vorzugsweise vertikal ausgerichtet sind. Zwischen den Seitenwänden 43, 44 erstreckt sich ein Kanalboden 45. Einlaufseitig und auslaufseitig zum Kanal 42 sind Auflaufschrägen 46 vorgesehen, die von einer Auflagefläche 48 der Energieführungskette 29 sich bis zum Kanalboden 45 erstrecken. Vorzugsweise geht die Auflageschräge 46 bündig in den Kanalboden 45 über. Der Kanalboden 45 ist gegenüber einem oberen Tragsteg 39 des Kettengliedes 35 vertieft angeordnet. Zwischen einem unteren Tragsteg 40 des Sonderkettengliedes 34 und dem Kanalboden 45 ist ein verjüngter Innenraum 51 gebildet. Dieser verjüngte Innenraum 51 ist in der Höhe kleiner als das Hohlprofil der Kettenglieder 35. Vorzugsweise ist der verjüngte Innenraum 51 in der Höhe derart bemessen, dass wenigstens eine Versorgungsleitung 28 ohne Klemmung in Längsrichtung der Energieführungskette 29 hindurchgeführt werden kann.

An einer Innenseite der Seitenwände 43, 44 des Sonderkettengliedes 34 sind Führungselemente 53 angeordnet. Diese Führungselemente 53 erstrecken sich in und entgegen der Kettenlängsrichtung. Des Weiteren sind die Führungselemente 53 gekrümmt ausgebildet. Diese Krümmung ist gegenüber einer Auflagefläche 48 der Energieführungskette 29 nach oben ausgerichtet. Dadurch kann die zumindest eine Versorgungsleitung 28 beim Umlenken geführt und gegen Knicken geschützt werden.

An den oberen Enden der Seitenwände 43, 44 sind Schwenkbegrenzungselemente 55 vorgesehen. Diese sind analog zu den Führungselementen 53 in und entgegengesetzt der Kettenlängsrichtung ausgerichtet. Diese Schwenkbegrenzungselemente 55 sind gegenüber einer Auflagefläche 48 der Energieführungskette 29 nach oben ausgerichtet. Beim Umlenken der Energieführungskette 29 erfolgt dadurch eine Begrenzung des Schwenkwinkels zwischen dem Sonderkettenglied 34 und dem unmittelbar dazu benachbarten Kettenglied 35.

An zumindest einem Ende des Kanals 52 ist ein Lichtschutzabschnitt 58 vorgesehen. Dieser Lichtschutzabschnitt 58 ist beispielsweise in einer Seitenansicht in Figur 5 dargestellt. Dieser Lichtschutzabschnitt 58 kann auch beidseitig am Ende des Kanales 42 vorgesehen sein. Der Lichtschutzabschnitt 58 stellt bevorzugt eine Verlängerung der Seitenwand 43, 44 dar und ragt über die Breite der benachbarten Kettenglieder 35 zum Sonderkettenglied 34 hinaus. Auch erstreckt sich der Lichtschutzabschnitt 58 bevorzugt zumindest entlang der Länge der Auflaufschräge 46.

Am freien Ende des Lichtschutzabschnittes 58 kann eine Einführschräge 61 vorgesehen sein. Diese ist gegenüber der Breite des Kanals 42 nach außen aufweitend ausgerichtet. Am gegenüberliegenden Ende des Kanales 42 kann sich die Einführschräge 61 auch unmittelbar an die Seitenwand 43, 44 anschließen oder daran angeformt sein.

Die Funktion des Sonderkettengliedes 34 ist in Verbindung mit einer horizontal verschiebbaren Tür 24 der Umhausung 14 in Figur 6 dargestellt.

Die Tür 24 weist an einem unteren Ende einen Schutzvorhang 63 auf, der vorzugsweise aus einer Vielzahl von Borsten 64 besteht. Dadurch kann eine Abschirmung der Bearbeitungsstation 12 zwischen der Tür 24 und einem Untergrund erfolgen.

Beim Schließen der Tür 24 nach dem Einfahren der Palette 18 in die Bearbeitungsstation 12 wird der Schutzvorhang 63 innerhalb des Kanals 42 geführt. Eingangsseitig zum Kanal 42 gleiten die Borsten 64 an der Auflaufschräge 26 auf und werden mittels einer Schrägstellung oder einer gekrümmten Stellung entlang des Kanalbodens 45 in Schließrichtung der Tür 24 gemäß Pfeil 66 geführt. Am auslaufseitigen Ende des Kanals 42 kommt ein Teil der Borsten 64 gegenüber dem Kanalboden 45 frei. Ein anderer Teil der Borsten 64 liegt noch auf dem Kanalboden 45 oder auf der Auslaufschräge 46 auf, wodurch sich ein Öffnungsbereich 68 ergibt, der strichliniert dargestellt ist. Durch diesen Öffnungsbereich 68 kann Laserstrahlung austreten. Zur Vermeidung eines solchen Austritts ist der Lichtschutzabschnitt 58 beidseitig in Verlängerung des Kanals 42 vorgesehen, um diesen Öffnungsbereich 68 abzudecken und abzuschirmen.

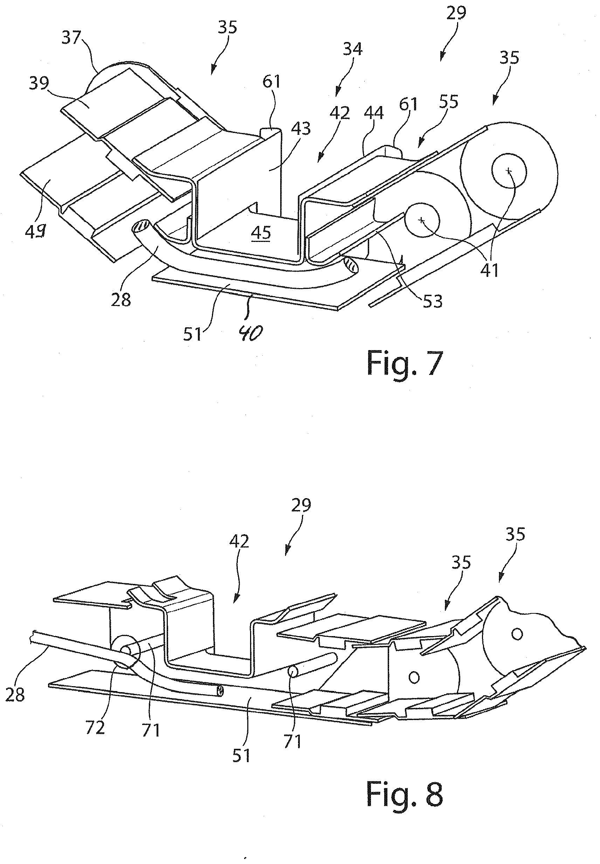

In Figur 7 ist eine schematische Schnittansicht der Energieführungskette 29 gemäß Figur 4 in einer Umlenkposition dargestellt. Daraus geht hervor, dass das jeweilige an das Sonderkettenglied 34 angrenzende Kettenglied 35 in der Schwenkbewegung durch das Schwenkbegrenzungselement 55 begrenzt ist. Ein oberer Tragsteg 39 des Kettengliedes 35 liegt an dem Schwenkbegrenzungselement 55 an. Die Versorgungsleitung 28 kann bei dieser Ausführungsform in dem verjüngten Innenraum 51 fixiert sein. Dies kann beispielsweise dadurch erfolgen, dass in dem verjüngten Innenraum 51 sich längs den Tragstegen 40 erstreckende Aufnahmekammern gebildet sind, welche die einzelne oder mehrere Versorgungsleitungen 28 geklemmt aufnehmen. Durch das jeweilige Führungselement 53 wird bei der Umlenkung der Energieführungskette 29 ein Knicken der Versorgungsleitung verhindert.

In Figur 8 ist eine alternative Ausführungsform der Energieführungskette 29 zu Figur 7 dargestellt. Bei dieser Ausführungsform ist vorgesehen, dass in der Gelenkachse 41 des Kettengliedes 35 und des Sonderkettengliedes 34 ein Verbindungsstab 71 vorgesehen ist. Dieser Verbindungsstab 71 liegt in einer neutralen Faser der Kettenglieder. Diese neutrale Faser der Kettenglieder 35 wird durch eine Verbindungslinie entlang der jeweiligen Längsachse gebildet. In dieser neutralen Faser kann die Versorgungsleitung 38 frei von Zug- und Druckspannungen aufgenommen und geführt sein.

Bei der in Figur 8 dargestellten Ausführungsform ist bevorzugt vorgesehen, dass die zumindest eine Versorgungsleitung 28 an dem Verbindungsstab 71 befestigt ist. Dies kann beispielsweise durch einen Kabelbinder 72 erfolgen. Somit ist die Versorgungleitung 28 vor und nach dem Kanal 42 an den jeweiligen Verbindungsstegen 71 befestigt und somit fest zum Sonderkettenglied 34 aufgenommen. Die zumindest eine Versorgungsleitung 28 ist am jeweiligen Ende der Energieführungskette 29 lose geführt. Vorteilhafterweise kann zum Längenausgleich die zumindest eine Versorgungsleitung 28 abschnittsweise schlangenlinienförmig in dem Hohlprofil aufgenommen sein.

Das Sonderkettenglied 34 ist bevorzugt aus einem metallischen Material, insbesondere aus einem Blech, ausgebildet. Dadurch kann eine hohe Steifigkeit erzielt werden. Gleichzeitig ist die Ausbildung von reduzierten Wandstärken ermöglicht. Dadurch kann einerseits die Höhe des Kanals 42 und andererseits der verjüngte Innenraum 51 jeweils mit einem maximalen Umfang ausgebildet sein.

Des Weiteren kann alternativ vorgesehen sein, dass das Sonderkettenglied 34 zwei- oder mehrteilig ausgebildet ist. Vorteilhafterweise ist im Übergangsbereich zwischen dem Kanalboden 45 und einer Seitenwand 43, 44 eine gelenkige Verbindung vorgesehen. Alternativ kann auch im Kanalboden 45 eine gelenkige Verbindung vorgesehen sein. Eine solche Anordnung ist insbesondere dann vorgesehen, wenn eine vergrößerte Kanalbreite erforderlich ist.

## Patentansprüche

1. Energieführungskette mit mehreren gelenkig verbundenen Kettengliedern (35), die einen sich in Kettenlängsrichtung erstreckenden Arbeitsraum aufweisen, in dem die zumindest eine Versorgungsleitung (28) in Kettenlängsrichtung geführt ist, wobei jedes Kettenglied (35) aus zwei einander gegenüberliegenden Seitenelementen (37, 38) und zwei einander gegenüberstehenden länglichen Tragstegen (39, 40) gebildet ist und wobei ein jeweiliges Hohlprofil des Kettengliedes (35) durch die Seitenelemente (37,38) und die Tragstege (39,40) gebildet ist, **dadurch gekennzeichnet, dass** zwischen zwei Kettengliedern (35) zumindest ein Sonderkettenglied (34) vorgesehen ist, welches gegenüber den an das Sonderkettenglied (34) angrenzenden Kettengliedern (35) einen in der Höhe verringerten Querschnitt aufweist, wobei das Sonderkettenglied (34) eine Auflagefläche (48) aufweist und dieser gegenüberliegend einen nach oben ausgerichteten und nach oben offenen Kanal (42) aufweist, der sich quer zur Kettenlängsrichtung erstreckt.

2. Energieführungskette nach Anspruch 1, **dadurch gekennzeichnet, dass** ein zur Auflagefläche (48) weisender Tragsteg (40) des Sonderkettengliedes (34) in der Ebene eines unteren Tragsteges (49) der benachbarten Kettenglieder (35) liegt.

3. Energieführungskette nach einem der Ansprüche 1 oder 2, **dadurch gekennzeichnet, dass** sich ein in der Höhe verjüngte Innenraum (51) des Sonderkettengliedes (34) zwischen der Auflagefläche (48) und einer neutralen Faser oder unterhalb einer neutralen Faser erstreckt, welche durch eine Verbindungslinie gebildet ist, die sich entlang von Gelenkachsen (41) von zumindest zwei benachbarten Kettengliedern (35) erstreckt.

4. Energieführungskette nach einem der vorhergehenden Ansprüche, **dadurch gekennzeichnet, dass** an zumindest einem Ende des Kanals (42) des Sonderkettengliedes (34) ein Lichtschutzabschnitt (58) vorgesehen ist, der sich vorzugsweise über die Breite des angrenzenden Kettengliedes (35) nach außen erstreckt.

5. Energieführungskette nach einem der Ansprüche 1 bis 4, **dadurch gekennzeichnet, dass** der Kanal (42) des Sonderkettengliedes (34) an dem jeweiligen Ende des Kanals (42) eine Einführschräge (61) aufweist.

6. Energieführungskette nach einem der Ansprüche 1 bis 5, **dadurch gekennzeichnet, dass** der Kanal (42) des Sonderkettengliedes (34) stirnseitig jeweils eine Auflaufschräge (46) aufweist, die sich von der Auflagefläche (48) des Sonderkettengliedes (34) bis zum Kanalboden (45) erstreckt.

7. Energieführungskette nach Anspruch 6, **dadurch gekennzeichnet, dass** der Kanalboden (45) eine Länge aufweist, die kleiner als der Abstand der einander gegenüberliegenden Seitenelemente (37, 38) des Sonderkettengliedes (34) und der benachbarten Kettenglieder (35) ist.

8. Energieführungskette nach einem der Ansprüche 1 bis 7, **dadurch gekennzeichnet, dass** in Kettenlängsrichtung gesehen vor und hinter dem Kanal (42) Seitenelemente (37, 38) des Sonderkettengliedes (34) sich erstrecken, welche gelenkig mit den jeweils dazu benachbarten Kettengliedern (35) verbunden sind.

9. Energieführungskette nach einem der vorhergehenden Ansprüche, **dadurch gekennzeichnet, dass** an dem in der Höhe reduzierten Innenraum (51) angrenzend in und entgegengesetzt der Kettenlängsrichtung ein Führungselement (53) vorgesehen ist, welches sich vorzugsweise in eine Umlenkrichtung der Kettenglieder (35) gekrümmt ist.

10. Energieführungskette nach einem der vorhergehenden Ansprüche, **dadurch gekennzeichnet, dass** zumindest eine Versorgungsleitung (28) in oder benachbart zur Gelenkachse (41) zwischen dem Sonderkettenglied (34) und dem daran angrenzenden Kettenglied (35) oder in dem verjüngten Innenraum (51) befestigt ist.

11. Energieführungskette nach Anspruch 10, **dadurch gekennzeichnet, dass** die zumindest eine Versorgungsleitung (28) an einem einlaufseitigen und/oder auslaufseitigen Ende der Energieführungskette (11) lose geführt ist.

12. Energieführungskette nach einem der Ansprüche 1 bis 11, **dadurch gekennzeichnet, dass** an den nach oben offenen Seitenwänden (43, 44) des Kanals (42) in und entgegengesetzt zur Kettenlängsrichtung Schwenkbegrenzungselemente (55) vorgesehen sind.

13. Energieführungskette nach einem der vorhergehenden Ansprüche, **dadurch gekennzeichnet, dass** das Sonderkettenglied (34) aus einem metallischen Werkstoff, insbesondere Blech, ausgebildet ist und vorzugsweise einen Anschluss für einen Nullleiter aufweist.

14. Bearbeitungsmaschine zum Bearbeiten eines Werkstücks (16), mit einer Bearbeitungsstation (12), in der durch einen Bearbeitungskopf (21) ein Bearbeitungsstrahl (22) auf das Werkstück (16) gerichtet ist, mit einer Palette (18), welche eine Werkstückauflage (17) zur Aufnahme des Werkstücks (16) aufweist und zwischen der Bearbeitungsstation (12) und einer Be- und Entladestation (26) verfahrbar ist und mit einer die Bearbeitungsstation (12) umgebenden Umhausung (14), welche zumindest eine Tür (24) für die Zugänglichkeit zur Bearbeitungsstation (12) aufweist, **dadurch gekennzeichnet, dass** eine Energieführungskette (11) mit einem Ende (31) in der Bearbeitungsstation (12) oder in der Be- und Entladestation (26) fixiert ist und mit dem anderen Ende (32) an der verfahrbaren Palette (18) fixiert ist und dass in dem Öffnungsbereich der Tür (24) ein Sonderkettenglied (34) in der Energieführungskette (11) vorgesehen ist, welches gegenüber den benachbarten Kettengliedern (35) einen in der Höhe verringerten Querschnitt mit einem verjüngten Innenraum (51) aufweist, wobei das Sonderkettenglied (34) eine Auflagefläche (48) aufweist und dieser gegenüberliegend einen nach oben ausgerichteten und nach oben offenen Kanal (42) aufweist, der sich quer zur Kettenlängsrichtung erstreckt.

## Claims

1. An energy chain having a plurality of articulated chain links (35) which have a working space which extends in the longitudinal direction of the chain and in which at least one supply line (28) is guided in the longitudinal direction of the chain, wherein each chain link (35) is formed from two side elements (37, 38) located opposite one another and two elongated support bars (39, 40) located opposite one another, and wherein a respective hollow profile of the chain link (35) is formed by the side elements (37, 38) and the support bars (39, 40), **characterized in that** at least one special chain link (34) is provided between two chain links (35), which has a reduced cross-section in height compared with the chain links (35) adjacent to the special chain link (34), wherein the special chain link (34) has a bearing surface (48) and, opposite thereto, has an upwardly aligned and upwardly open channel (42) which extends transversely to the longitudinal direction of the chain.

2. The energy chain according to claim 1, **characterized in that** a support bar (40) of the special chain link (34) pointing towards the bearing surface (48) lies in the plane of a lower support bar (49) of the adjacent chain links (35).

3. The energy chain according to one of claims 1 or 2, **characterized in that** an inner space (51) of the special chain link (34), which is tapered in height, extends between the bearing surface (48) and a neutral fiber or below a neutral fiber, which is formed by a connecting line extending along articulated axes (41) of at least two adjacent chain links (35).

4. The energy chain according to one of the preceding claims, **characterized in that** a light protection portion (58) is provided at at least one end of the channel (42) of the special chain link (34) and preferably extends outwards over the width of the adjacent chain link (35).

5. The energy chain according to one of claims 1 to 4, **characterized in that** the channel (42) of the special chain link (34) has an insertion chamfer (61) at the respective end of the channel (42).

6. The energy chain according to one of claims 1 to 5, **characterized in that** the channel (42) of the special chain link (34) has a run-on chamfer (46) on the front side in each case, which extends from the bearing surface (48) of the special chain link (34) to the channel bottom (45).

7. The energy chain according to claim 6, **characterized in that** the channel bottom (45) has a length which is smaller than the distance between the side elements (37, 38) of the special chain link (34) opposite one another and the adjacent chain links (35).

8. The energy chain according to one of claims 1 to 7, **characterized in that**, viewed in the longitudinal direction of the chain, side elements (37, 38) of the special chain link (34) extend in front of and behind the channel (42), said side elements being connected in an articulated manner to the chain links (35) adjacent thereto in each case.

9. The energy chain according to one of the preceding claims, **characterized in that** a guide element (53) is provided adjacent to the inner space (51), which is reduced in height, in and opposite to the longitudinal direction of the chain, said guide element preferably being curved in a deflection direction of the chain links (35).

10. The energy chain according to one of the preceding claims, **characterized in that** at least one supply line (28) is fixed in or adjacent to the articulated axes (41) between the special chain link (34) and the chain link (35) adjacent thereto or in the tapered inner space (51).

11. The energy chain according to claim 10, **characterized in that** the at least one supply line (28) is loosely guided at an inlet-side and/or outlet-side end of the energy chain (11).

12. The energy chain according to one of claims 1 to 11, **characterized in that** pivot limiting elements (55) are provided on the upwardly open side walls (43, 44) of the channel (42) in and opposite to the longitudinal direction of the chain.

13. The energy chain according to one of the preceding claims, **characterized in that** the special chain link (34) is formed from a metallic material, in particular metal sheet, and preferably has a connection for a neutral conductor.

14. A processing machine for processing a workpiece (16), with a processing station (12), in which a processing beam (22) is directed through a processing head (21) onto the workpiece (16), with a pallet (18), which has a workpiece support (17) for holding the workpiece (16) and can be moved between the processing station (12) and a loading and unloading station (26), and having an enclosure (14) which surrounds the processing station (12) and which has at least one door (24) for accessibility to the processing station (12), **characterized in that** an energy chain (11) is fixed with one end (31) in the processing station (12) or in the loading and unloading station (26) and is fixed with the other end (32) to the movable pallet (18), and that in the opening region of the door (24) a special chain link (34) is provided in the energy chain (11), which has a reduced cross-section in height compared to the adjacent chain links (35) with a tapered inner space (51), wherein the special chain link (34) has a bearing surface (48) and, opposite thereto, has an upwardly oriented and upwardly open channel (42) which extends transversely to the longitudinal direction of the chain.

## Revendications

1. Chaîne de transmission d'énergie comprenant plusieurs maillons de chaîne (35) reliés de manière articulée et présentant un espace de travail, s'étendant dans le sens longitudinal de la chaîne, dans lequel au moins une conduite d'alimentation (28) est acheminée dans la direction longitudinale de la chaîne, dans laquelle chaque maillon de chaîne (35) est formé de deux éléments latéraux (37, 38) opposés l'un à l'autre et de deux barres de support (39, 40) allongées opposées l'une à l'autre, et dans laquelle un profilé creux du maillon de chaîne (35) respectif est formé par les éléments latéraux (37, 38) et les barres de support (39, 40), **caractérisée en ce que**, entre deux maillons de chaîne (35), il est prévu au moins un maillon de chaîne spécial (34) présentant une section transversale de hauteur réduite par rapport aux maillons de chaîne (35) adjacents au maillon de chaîne spécial (34), dans laquelle le maillon de chaîne spécial (34) présente une surface d'appui (48) et, en face de celle-ci, un canal (42) orienté vers le haut et ouvert vers le haut s'étendant transversalement à la direction longitudinale de la chaîne.

2. Chaîne de transmission d'énergie selon la revendication 1, **caractérisée en ce qu'**une barre de support (40) du maillon de chaîne spécial (34), orientée vers la surface d'appui (48), se trouve dans le plan d'une barre de support inférieure (49) des maillons de chaîne (35) voisins.

3. Chaîne de transmission d'énergie selon l'une des revendications 1 ou 2, **caractérisée en ce qu'**un espace intérieur (51) du maillon de chaîne spécial (34), de hauteur réduite, s'étend entre la surface d'appui (48) et une fibre neutre ou sous une fibre neutre formée par une ligne de liaison s'étendant le long d'axes d'articulation (41) d'au moins deux maillons de chaîne (35) voisins.

4. Chaîne de transmission d'énergie selon l'une des revendications précédentes, **caractérisée en ce que**, à au moins une extrémité du canal (42) du maillon de chaîne spécial (34), il est prévu une section de protection contre la lumière (58) s'étendant de préférence vers l'extérieur sur la largeur du maillon de chaîne (35) adjacent.

5. Chaîne de transmission d'énergie selon l'une des revendications 1 à 4, **caractérisée en ce que** le canal (42) du maillon de chaîne spécial (34) présente un chanfrein d'insertion (61) au niveau de l'extrémité respective du canal (42).

6. Chaîne de transmission d'énergie selon l'une des revendications 1 à 5, **caractérisée en ce que** le canal (42) du maillon de chaîne spécial (34) présente sur chaque face frontale un chanfrein d'arrivée (46) s'étendant de la surface d'appui (48) du maillon de chaîne spécial (34) au fond (45) du canal.

7. Chaîne de transmission d'énergie selon la revendication 6, **caractérisée en ce que** le fond (45) du canal présente une longueur inférieure à la distance entre les éléments latéraux (37, 38) opposés les uns aux autres du maillon de chaîne spécial (34) et des maillons de chaîne (35) voisins.

8. Chaîne de transmission d'énergie selon l'une des revendications 1 à 7, **caractérisée en ce que**, vu dans la direction longitudinale de la chaîne, devant et derrière le canal (42), s'étendent des éléments latéraux (37, 38) du maillon de chaîne spécial (34) reliés de manière articulée aux maillons de chaîne (35) qui leur sont respectivement voisins.

9. Chaîne de transmission d'énergie selon l'une des revendications précédentes, **caractérisée en ce qu'**un élément de guidage (53) est prévu au niveau de l'espace intérieur (51) de hauteur réduite, de manière adjacente dans et à l'opposé de la direction longitudinale de la chaîne, lequel est de préférence recourbé dans une direction de déviation des maillons de chaîne (35).

10. Chaîne de transmission d'énergie selon l'une des revendications précédentes, **caractérisée en ce qu'**au moins une conduite d'alimentation (28) est fixée dans ou à proximité de l'axe d'articulation (41) entre le maillon de chaîne spécial (34) et le maillon de chaîne (35) adjacent à celui-ci ou dans l'espace intérieur (51) réduit.

11. Chaîne de transmission d'énergie selon la revendication 10, **caractérisée en ce que** ladite au moins une conduite d'alimentation (28) est acheminée de manière lâche au niveau d'une extrémité côté entrée et/ou côté sortie de la chaîne de transmission d'énergie (11).

12. Chaîne de transmission d'énergie selon l'une des revendications 1 à 11, **caractérisée en ce que** des éléments limitant le pivotement (55) sont prévus sur les parois latérales (43, 44) ouvertes vers le haut du canal (42) dans et à l'opposé de la direction longitudinale de la chaîne.

13. Chaîne de transmission d'énergie selon l'une des revendications précédentes, **caractérisée en ce que** le maillon de chaîne spécial (34) est réalisé en un matériau métallique, en particulier en tôle, et présente de préférence un raccordement pour un conducteur neutre.

14. Machine d'usinage destinée à usiner une pièce (16), comprenant un poste d'usinage (12) dans lequel un faisceau d'usinage (22) est dirigé sur la pièce (16) par une tête d'usinage (21), comprenant une palette (18), laquelle présente un support de pièce (17) destiné à recevoir la pièce (16) et peut être déplacée entre le poste d'usinage (12) et un poste de chargement et de déchargement (26), et comprenant une enceinte (14) entourant le poste d'usinage (12), laquelle présente au moins une porte (24) permettant d'accéder au poste d'usinage (12), **caractérisée en ce qu'**une chaîne de transmission d'énergie (11) est fixée à une extrémité (31) dans le poste d'usinage (12) ou dans le poste de chargement et de déchargement (26) et est fixée à l'autre extrémité (32) au niveau de la palette (18) mobile et **en ce que**, dans la zone d'ouverture de la porte (24), il est prévu dans la chaîne de transmission d'énergie (11) un maillon de chaîne spécial (34) présentant, par rapport aux maillons de chaîne (35) voisins, une section transversale de hauteur réduite comprenant un espace intérieur (51) réduit, dans laquelle le maillon de chaîne spécial (34) présente une surface d'appui (48) et, en face de celle-ci, un canal (42) orienté vers le haut et ouvert vers le haut s'étendant transversalement à la direction longitudinale de la chaîne.
